Europäisches Patentamt

European Patent Office

Office européen des brevets

(11) Veröffentlichungsnummer: **0 330 864**
**A2**

## (12) EUROPÄISCHE PATENTANMELDUNG

(21) Anmeldenummer: 89102051.3

(22) Anmeldetag: 07.02.89

(51) Int. Cl.⁴: **B60K 15/02** , **F02M 25/08**

(30) Priorität: 27.02.88 DE 3806252

(43) Veröffentlichungstag der Anmeldung:
06.09.89 Patentblatt 89/36

(84) Benannte Vertragsstaaten:
AT CH DE ES FR GB IT LI SE

(71) Anmelder: **Adam Opel Aktiengesellschaft
Bahnhofsplatz 1 Postfach 17 10
D-6090 Rüsselsheim(DE)**

(72) Erfinder: **Rühl, Werner Jürgen, Dr.-Ing.
Dieburger Strasse 38
D-6070 Langen(DE)**
Erfinder: **Schwarz, Bernd, Dr.-Ing.
Moritzstrasse 10
D-6500 Mainz 1(DE)**

(74) Vertreter: **Bergerin, Ralf, Dipl.-Ing. et al
Adam Opel Aktiengesellschaft Bahnhofplatz
1 Postfach 17 10
D-6090 Rüsselsheim(DE)**

(54) **Vorrichtung zur Kraftstoffverdampfungskontrolle von Fahrzeugen.**

(57) Es wird eine Vorrichtung zur Kraftstoffverdampfungskontrolle von Fahrzeugen mit einem in Be- und Entlüftungen (2) des Kraftstoffsystems angeordneten Behälter (3), der ein Kraftstoff aufnehmendes Filtermaterial (5) enthält, vorgeschlagen. Das Filtermaterial (5) ist aus einem kraftstoffbeständigen Kunststoff hergestellt, der in Form eines offenzelligen Schaumstoffs oder eines Vliesstoffes vorliegt.

EP 0 330 864 A2

EP 0 330 864 A2

## Vorrichtung zur Kraftstoffverdampfungskontrolle von Fahrzeugen

Die Erfindung betrifft eine Vorrichtung zur Kraftstoffverdampfungskontrolle von Fahrzeugen mit einem in Be- und Entlüftungen des Kraftstoffsystems angeordneten Behälter, der ein Kraftstoff aufnehmendes Filtermaterial enthält.

Kraftstoffsysteme von Fahrzeugen verursachen infolge von Verdampfung der flüchtigen Bestandteile des Kraftstoffs eine erhebliche Luftverunreinigung und belasten daher die Umwelt. Durch Wärmeeinwirkung, z.B. bei Sonneneinstrahlung sowie Wärmestrahlung des Motors bei Stillstand, verdampfen die leicht flüchtigen Bestandteile des Kraftstoffs und entweichen durch Be- und Entlüftungen des Kraftstofftanks und des Saugsystems des Motors nach außen. Ebenso gelangen beim Füllen des Kraftstofftanks durch Verdampfung erhebliche Mengen der leicht flüchtigen Bestandteile in die Atmosphäre.

Um diese Umweltbelastung zu verringern, haben einige Länder eine Begrenzung der Kohlenwasserstoff-Emission für Kraftfahrzeuge eingeführt. Um die maximal zulässigen Emissionswerte einzuhalten, werden in den Be- und Entlüftungen des Kraftstoffsystems, insbesondere in der Be- und Entlüftungsleitung am Tank, Behälter vorgesehen, die mit einer dicht gepackten Schüttung aus Aktivkohlegranulat gefüllt sind. Die durch Wärmeeinwirkung bei Stillstand des Fahrzeugs verdampfenden flüchtigen Bestandteile des Kraftstoffs werden beim Durchströmen des Aktivkohlegranulats adsorbiert und damit am Entweichen in die Atmosphäre gehindert. Beim Laufen des Motors wird das Aktivkohlegranulat regeneriert, indem ein Teil der zur Verbrennung benötigten Luft durch den Behälter angesaugt wird. Dabei wird der Kraftstoff desorbiert und über einen am Behälter vorgesehenen Anschluß dem Motor zugeführt.

Um die Kohlenwasserstoff-Emission beim Befüllen des Treibstofftanks zu reduzieren, sind in einigen Ländern auch dafür Vorschriften mit maximal zulässigen Emissionswerten vorgesehen. Um diese beim Tanken maximal zugelassenen Emissionswerte einzuhalten, müssen im Kraftfahrzeug Vorrichtungen zur Kraftstoffverdampfungskontrolle mit entsprechend größerer Beladekapazität untergebracht werden.

Die bisherigen Behälter mit Aktivkohlegranulat weisen eine Reihe von Nachteilen auf. Das relativ große Totvolumen zwischen den Aktivkohlekörnern ist zur Adsorption von Kraftstoffdämpfen nicht geeignet. Zum Erreichen Bypass-freier Granulatschüttungen sind aufwendige Behälterkonstruktionen bzw. Füllverfahren notwendig. So müssen z.B. Siebböden und Druckfedern vorgesehen werden, um die Granulatschüttung federbelastet im Behälter zu lagern, oder es muß ein teures Behältermaterial mit Schrumpfeigenschaften verwendet werden. Für die Bypass-freien Granulatschüttungen sind ferner zylindrische Behälterformen aus technischen Gründen bevorzugt, die sich schwer in den vorhandenen Hohlräumen des Kraftfahrzeugs unterbringen lassen. Granulatschüttungen aus Aktivkohle haben ein geringes Rückhaltevermögen für Flüssigkeit, so daß eindringendes Kraftstoffkondensat leicht durchläuft. Aktivkohgranulat weist außerdem einen hohen Anteil an Mikroporen (Porengröße unter 1 nm) auf. Die Kraftstoffdämpfe werden in den Makro-, Meso- und Mikroporen der Aktivkohlekörper adsorbiert. Bei der Regenerierung des Systems wird hauptsächlich nur der Anteil des Kraftstoffs desorbiert, der im Bereich der Meso- und Makroporen adsorbiert ist. Der bei der Aktivkohle große Mikroporenbereich bleibt bei den üblichen Regenerierbedingungen, d.h. beim Durchsaugen von Luft aus der At mosphäre, mit Kraftstoffdampf weitgehend belegt und ist somit nicht reversibel nutzbar. Ein vorheriges Aufheizen der zum Regenerieren durch den Behälter gesaugten Luft, um den Kraftstoff auch im Mikroporenbereich zu desorbieren, wäre unvertretbar aufwendig und würde die Vorrichtung zur Kraftstoffverdampfungskontrolle erheblich verteuern. Aufgrund der großen Reaktivität der Mikroporen wird die Aktivkohle bei der Adsorption teilweise stark aufgeheizt, wodurch die Beladekapazität abnimmt.

Der vorliegenden Erfindung liegt die Aufgabe zugrunde, eine Vorrichtung der eingangs genannten Art zu schaffen, die keine aufwendigen Behälterkonstruktionen sowie keine zylindrische Behälterform erfordert, ein gutes Rückhaltevermögen für eindringenden Kraftstoffdampf und -kondensat hat und sich zu einem höheren Anteil unter den üblichen Bedingungen, d.h. ohne vorheriges Erwärmen der durchgesaugten Luft, regenerieren läßt.

Zur Lösung dieser Aufgabe wird die in Patentanspruch 1 angegebene Vorrichtung vorgeschlagen.

Als Filtermaterial eignen sich alle Kunststoffe, die kraftstoffbeständig sind und sich zu offenzelligen Schaumstoffen und/oder zu Vliesstoffen verarbeiten lassen. Die Vliesstoffe sind flexible, poröse, nicht gewebte oder gewirkte oder gestrickte Fasergebilde, die durch Verfestigung (z.B. mechanisch, durch Verkleben, Anlösen oder Verschweißen) gebildet werden. Bei den Schaumkunststoffen sind diejenigen mit einer guten elastischen Verformbarkeit bevorzugt. Geeignete Kunststoffe für die vorliegende Erfindung sind beispielsweise Polyurethane und Polyethersulfone.

Die erfindungsgemäße Vorrichtung mit einem Schaumkunststoff oder Vliesstoff aus Kunststoff als Filtermaterial hat den Vorteil, daß der Behälter für das Filtermaterial keine spezielle Form haben muß,

2

sondern seine Form dem vorhandenen Hohlraum im Fahrzeug angepaßt sein kann. Der Schaumkunststoff kann entweder an Ort und Stelle durch Ausschäumen des Behälters hergestellt werden oder als Formstück vorgefertigt und in den Behälter Bypass-frei eingepaßt werden. Der vorgefertigte Vliesstoff kann ebenfalls Bypass-frei in den Behälter eingesetzt werden. Aufwendige Behälterkonstruktionen, wie sie für Schüttungen aus Aktivkohlegranulat erforderlich sind, sind bei der erfindungsgemäßen Vorrichtung nicht notwendig. Die Filtermaterialien der erfindungsgemäßen Vorrichtung lassen sich rüttelsicher und Bypass-frei in den Behälter einpassen infolge der besseren Haftung an der Behälterwand. Ferner haben die Filtermaterialien der erfindungsgemäßen Vorrichtung ein besseres Rückhaltevermögen für Kraftstoffkondensat als Aktivkohlegranulat.

Schaumkunststoffe und Vliesstoffe weisen keinen hohen Anteil an Mikroporen auf und lassen sich daher zu einem höheren Prozentsatz unter normalen Bedingungen, d.h. beim Durchsaugen von Luft mit Außentemperatur, regenerieren. Bei Aktivkohlegranulaten ist die Regenerierbarkeit gering, z.B. etwa 42 % während die Regenerierbarkeit bei Kunststoffschäumen und Vliesstoffen wesentlich höher liegt, z.B. bei Polyurethan mit Aktivkohleeinlagerung über 80 %. Bei Kunststoffschäumen bzw. Vliesen ohne anorganisches Adsorbens liegt die Regenerierbarkeit noch höher und kann bis nahezu 100 % betragen. Durch den geringen Anteil an Mikroporen der Kunststoffschäume und Vliesstoffe aus Kunststoff wird nur wenig Adsorptionswärme frei. Dadurch und durch das gute Rückhaltevermögen für Flüssigkeiten wird eine hohe Beladungskapazität auch bei stoßartiger Belastung durch Dämpfe und Kondensat erreicht. Die Filtermaterialien sind außerdem leichter und kostengünstiger als Aktivkohlegranulat.

Die aktive Oberfläche des Filtermaterials soll eine Mindestgröße haben, um für ein gegebenes Volumen an Filtermaterial eine ausreichende Adsorption und Absorption der Kraftstoffdämpfe zu erreichen. Nach oben hin ist die aktive Oberfläche dadurch begrenzt, daß der Anteil der Mikroporen nicht zu groß wird und damit die Regenerierbarkeit nicht zu stark abnimmt. Da das Filtermaterial der erfindungsgemäßen Vorrichtung im Gegensatz zu Aktivkohle die flüchtigen Bestandteile des Kraftstoffs nicht nur an der Porenoberfläche adsorbiert, sondern auch in dem Kunststoff selbst aufnimmt, und der Kunststoff dabei quillt, kann die aktive Oberfläche des Filtermaterials in der erfindungsgemäßen Vorrichtung bei gleicher Rückhaltewirkung für den Kraftstoff wesentlich kleiner als bei Aktivkohle sein. Vorzugsweise beträgt die aktive Oberfläche des kein zusätzlich eingelagertes Adsorbens enthaltenden Filtermaterials mindestens 10 m²/l. Wenn die aktive Oberfläche des Kunststoffschaums oder des Vliesstoffes wesentlich vergrößert werden soll, können nach bekannten Verfahren zusätzliche Adsorbentien, z.B. Aktivkohle, in den Schaum oder den Vliesstoff eingelagert werden. In diesem Fall liegt die aktive Oberfläche vorzugsweise im Bereich von 40 000 bis 330 000 m²/l. Ein besonders bevorzugter Bereich beträgt 60 000 bis 110 000 m²/l.

Der Anteil der Mikroporen des Filtermaterials sollte möglichst gering sein. Dies ist bei der zur Zeit üblichen technischen Herstellung der für die erfindungsgemäße Vorrichtung geeigneten Schaum- und Vliesstoffe automatisch gegeben, da dabei keine Mikroporen entstehen. Wenn das Filtermaterial zusätzliche Adsorbentien eingelagert enthält, soll die durchschnittliche Porengröße dieses Materials größer als 1 nm sein.

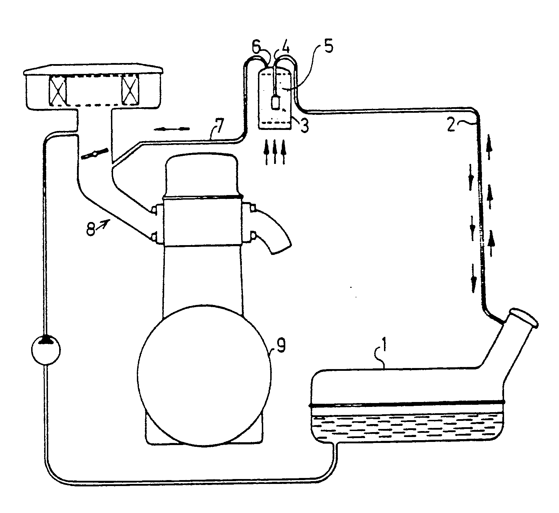

Die Figur zeigt eine schematische Darstellung eines geschlossenen Kraftstoffsystems mit der erfindungsgemäßen Vorrichtung zur Kraftstoffverdampfungskontrolle. Am Tank 1 ist eine Leitung zur Be- und Entlüftung 2 vorgesehen, die in einen am Behälter 3 vorgesehenen Anschluß 4 mündet. Der Behälter 3 enthält ein Filtermaterial 5 aus einem kraftstoffbeständigen Kunststoff, der in Form eines offenzelligen Schaumstoffs oder eines Vliesstoffes vorliegt. Am Behälter 3 ist ein zweiter Anschluß 6 vorgesehen, in den eine Leitung zur Be- und Entlüftung 7 des Saugsystems 8 des Motors 9 mündet. Der Behälter 3 ist an seinem Boden mit Öffnungen versehen.

Die aus dem Tank 1 über die Leitung 2 entweichenden Kraftstoffdämpfe werden über den Anschluß 4 in das Filtermaterial 5 geleitet und hier ad- und absorbiert. Entsprechendes gilt für aus dem Saugsystem 8 des Motors 9 entweichende Kraftstoffdämpfe, die über die Leitung 7 in den Behälter 3 und das Filtermaterial 5 gelangen. Bei Motorbetrieb wird Frischluft durch die Öffnungen im Boden des Behälters 3 (vgl. die Pfeile) durch das Filtermaterial über den zum Saugsystem 8 des Motors führenden Anschluß 6 gesaugt, wobei das kraftstoffbeladene Filtermaterial 5 regeneriert wird.

Beispiel und Vergleichsbeispiel

Es wurde ein Vlies aus Polyethersulfonfasern mit einem Faserdurchmesser von etwa 0,02 mm, einer Dichte von 96 g/l und einem Gehalt von 28,8 g Aktivkohle je Liter Vlies mit einem Aktivkohlegranulat (Chemviron Aktivkohle Typ BPX 8 x 30) verglichen. Ein 850 cm³-Behälter mit einem Durchmesser von 9,5 cm und einer Höhe von 12 cm wurde jeweils mit den Filtermaterialien gefüllt. Die Ergebnisse sind in folgender Tabelle zusammengefaßt:

| | Aktivkohle enthaltender Polyethersulfon-Vlies | Chemviron Aktivkohle Typ BPX 8 x 30 |
|---|---|---|
| Aktive Oberfläche (m²/l) | 77 000 | 500 000 - 600 000 |
| Adsorption (g) Benzin Benzol | 22,8 | 35 - 40 |
| Gewicht Füllmaterial (g) | 82 | 395 |
| Regenerierbarkeit (%) | >80 | 42 |
| Reversible Adsorptionskapazität (g) Benzin bzw. Benzol | 18,2 | 16,8 |

**Ansprüche**

1. Vorrichtung zur Kraftstoffverdampfungskontrolle von Fahrzeugen mit einem in Be- und Entlüftungen des Kraftstoffsystems angeordneten Behälter, der ein Kraftstoff aufnehmendes Filtermaterial enthält, dadurch **gekennzeichnet**, daß das Filtermaterial (5) aus einem kraftstoffbeständigen Kunststoff hergestellt ist, der in Form eines offenzelligen Schaumstoffs oder eines Vliesstoffs vorliegt.

2. Vorrichtung nach Anspruch 1, dadurch **gekennzeichnet**, daß das Filtermaterial (5) den Kraftstoff adsorbiert und durch Quellung des Kunststoffs absorbiert.

3. Vorrichtung nach Anspruch 1 oder 2, dadurch **gekennzeichnet**, daß das Filtermaterial (5) ein Weichschaumkunststoff ist.

4. Vorrichtung nach einem der Ansprüche 1 bis 3, dadurch **gekennzeichnet**, daß der Kunststoff Polyurethan ist.

5. Vorrichtung nach einem der Ansprüche 1 bis 3, dadurch **gekennzeichnet**, daß der Kunststoff Polyethersulfon ist.

6. Vorrichtung nach einem der Ansprüche 1 bis 5, dadurch **gekennzeichnet**, daß der Anteil der Mikroporen des Filtermaterials möglichst klein ist.

7. Vorrichtung nach einem der Ansprüche 1 bis 6, dadurch **gekennzeichnet**, daß die durchschnittliche Porengröße des Filtermaterials größer als 1 nm ist.

8. Vorrichtung nach einem der Ansprüche 1 bis 7, dadurch **gekennzeichnet**, daß der Kunststoff ein zusätzliches anorganisches bzw. organisches Adsorbens eingelagert enthält.

9. Vorrichtung nach Anspruch 8, dadurch**gekennzeichnet**, daß das Adsorbens Aktivkohle ist.

10. Vorrichtung nach einem der Ansprüche 1 bis 7, dadurch **gekennzeichnet**, daß das kein zusätzlich eingelagertes Adsorbens enthaltende Filtermaterial eine aktive Oberfläche von mindestens 10 m²/ aufweist.

11. Vorrichtung nach einem der Ansprüche 1 bis 9, dadurch **gekennzeichnet**, daß die aktive Oberfläche des ein zusätzlich eingelagertes Adsorbens enthaltenden Filtermaterials im Bereich von 40 000 bis 300 000 m² /l liegt.

12. Vorrichtung nach Anspruch 11, dadurch **gekennzeichnet**, daß die aktive Oberfläche des ein zusätzlich eingelagertes Adsorbens enthaltenden Filtermaterials im Bereich von 60 000 bis 110 000 m² /l liegt.